# EUROPEAN PATENT APPLICATION

(11) **EP 4 776 417 A1**
(43) Date of publication of application: **15.07.2026**
(21) Application number: 25855382.5
(22) Date of filing: 22.08.2025
(51) Int. Cl.: H01M 50/325, H01M 50/333, H01M 50/204, H01M 50/249

(54) **BATTERY PACK HAVING SELECTIVELY CONFIGURABLE NUMBER OF VENTING VALVES**

(30) Priority: 11.09.2024 KR 20240123909 U
(71) Applicant: LG ENERGY SOLUTION, LTD., Seoul 07335 (KR)
(72) Inventor: SON, Hong Se, Daejeon 34122 (KR); HER, Pill Jun, Daejeon 34122 (KR); JO, Yeong Shin, Daejeon 34122 (KR)
(74) Representative: BCKIP Part mbB
(86) International application number: PCT/KR2025/012763
(87) International publication number: WO 2026/059154

(57) **Abstract**

Disclosed is a battery pack including a battery pack housing having a receiving portion configured to receive a plurality of battery modules and a cover plate coupled to an open upper surface of the battery pack housing, wherein the battery pack housing includes side walls formed in a quadrangular frame shape, a plurality of openings is formed in the side walls, and any one of a cover and a venting valve is selectively coupled to an outer surface of each of the plurality of openings.

## Description

### [Technical Field]

This application claims the benefit of priority to Korean Patent Application No. 2024-0123909 filed on September 11, 2024, the disclosure of which is incorporated herein by reference in its entirety.

The present invention relates to a battery pack enabling selective application of the number of venting valves. More particularly, the present invention relates to a battery pack enabling selective application of the number of venting valves according to the capacities of battery modules having different amounts of gas discharged during thermal runaway.

### [Background Art]

Carbon emission regulations are being tightened as an alternative for reducing greenhouse gases, and the proportion of people choosing eco-friendly energy as a source of electricity is gradually increasing. Thereamong, lithium secondary batteries are being used as an energy source for various electronic devices because the lithium secondary batteries can be reused through repeated charging and discharging, unlike primary batteries that are used once and discarded.

Furthermore, in fields requiring high-power and high-capacity energy sources, such as electric vehicles, the proportion of lithium secondary batteries assembled into battery modules and battery packs for application is increasing.

Lithium secondary batteries inevitably generate heat during repeated charging and discharging. In addition, overcurrent may flow, whereby the temperature of a lithium secondary battery may increase sharply, which may cause electrolyte decomposition reactions, resulting in generation of gas. A battery pack may be constituted by a plurality of battery modules connected in series and in parallel, and each of the battery modules may include a plurality of lithium secondary batteries. If gas is generated in the lithium secondary battery, the battery pack may explode due to an increase in the pressure of the gas collected in the battery pack. Therefore, a venting valve is provided in a battery pack case in order to discharge the gas in the battery pack to the outside such that the internal pressure of the battery pack decreases.

For electric vehicles, the type of a battery pack that is mounted varies depending on the vehicle model, which may be a factor in cost increases. Since the price of electric vehicles significantly impacts sales, cost competitiveness among manufacturers is intensifying. Therefore, in order to reduce costs, a single battery pack may be applied to different types of electric vehicles having different battery module capacities.

However, since the electrical capacity differs depending on the electric vehicle model, the amount of gas discharged during thermal runaway may vary. Therefore, when the amount of gas discharged is large, the number of venting valves added to the battery pack needs to be increased, and when the amount of gas discharged is small, the number of venting valves added to the battery pack needs to be decreased.

Patent Document 1 relates to a battery tray, wherein a main body of the battery tray includes a bottom plate, a side beam, and a plurality of separation plates, the bottom plate is divided into a plurality of receiving spaces in which battery modules are disposed, and a first hole and a second hole for flame, smoke, or gas discharge are formed in the side beam and/or the bottom plate corresponding to the receiving space.

In Patent Document 1, it is difficult to change the number of venting valves considering the capacity of the battery module because the holes for gas discharge are formed in the battery tray corresponding to a battery pack case.

Therefore, there is a need for a structure in which the same battery pack is applied to various types of electric vehicles to secure cost competitiveness, the number of venting valves is set considering the discharge amount of gas generated according to the capacity of a battery module, thereby securing safety, and unnecessary consumption of the venting valves is prevented.

### (Prior Art Document)

(Patent Document 1) Chinese Patent Application Publication No. 112531246 (2021.03.19)

### [Disclosure]

### [Technical Problem]

The present invention has been made in view of the above problems, and it is an object of the present invention to provide a battery pack enabling selective application of the number of necessary venting valves according to the electrical capacity of an electric vehicle to which the battery pack is applied.

### [Technical Solution]

A battery pack according to the present invention to accomplish the above object includes a battery pack housing having a receiving portion configured to receive a plurality of battery modules and a cover plate coupled to an open upper surface of the battery pack housing, wherein the battery pack housing includes side walls formed in a quadrangular frame shape, a plurality of openings is formed in the side walls, and any one of a cover and a venting valve is selectively coupled to an outer surface of each of the plurality of openings.

The plurality of openings may be formed in two of the side walls that are parallel to each other.

Each of the plurality of openings may be configured such that a circular through-hole is formed through the center of a quadrangular recess portion formed in an inner surface of the side wall.

The recess portion may be provided with a first fastening recess formed through the side wall, and a bolt may be inserted through first fastening recess to fix a fastening member coupled to the cover or the venting valve.

A fixing member may be mounted in the recess portion, and the fixing member may be provided with a second fastening recess for coupling with the side wall and the cover and a third fastening recess for coupling with the venting valve.

The second fastening recess may be formed at a position corresponding to a first fastening recess formed in the recess portion.

When the cover is coupled to at least one of the plurality of openings, the cover may be coupled to the side wall and the fixing member via a bolt inserted through the first fastening recess and the second fastening recess.

When the venting valve is coupled to at least one of the plurality of openings, the venting valve may be disposed in the opening.

The venting valve may be provided with a fourth fastening recess, and may be coupled to the fixing member via a bolt inserted through the fourth fastening recess and the third fastening recess.

The venting valve may include a plurality of passages for gas discharge, a rupture portion configured to rupture when the internal pressure of the battery pack increases, and a pressing portion configured to press the rupture portion.

The plurality of openings may be formed in a side surface facing swelling outer surfaces of the battery modules.

In addition, the present invention may provide various combinations of the above solving means.

### [Advantageous Effects]

In the present invention, it is possible to selectively apply the number of venting valves applied to a battery pack according to the capacity of an electric vehicle to which the battery pack is applied.

Therefore, it is possible to apply a single type of battery pack to various types of electric vehicles, thereby achieving cost reduction.

In addition, the venting valve is applied considering the amount of gas generated in a battery module, whereby it is possible to achieve smooth gas discharge and to prevent unnecessary consumption of the venting valves.

### [Description of Drawings]

FIG. 1 is an exploded perspective view of a battery pack according to the present invention.
FIG. 2 is a partial enlarged view of FIG. 1.
FIG. 3 is an exploded perspective view of a part where a cover is attached to an opening.
FIG. 4 is an exploded perspective view of a part where a venting valve is added to the opening.
FIG. 5 is a perspective view of the venting valve.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

The same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in more detail with reference to the drawings.

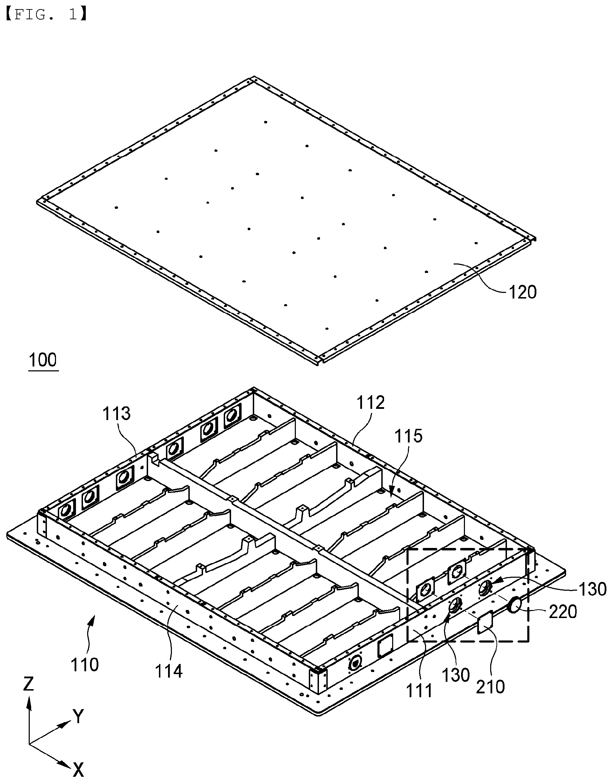

FIG. 1 is an exploded perspective view of a battery pack according to the present invention.

Referring to FIG. 1, the battery pack 100 according to the present invention includes a battery pack housing 110 having a receiving portion 115 configured to receive a plurality of battery modules and a cover plate 120 coupled to an open upper surface of the battery pack housing 110, wherein the battery pack housing 110 includes side walls formed in a quadrangular frame shape, and a plurality of openings 130 is formed in the side walls.

The side walls include a first side wall 111, a second side wall 112, a third side wall 113, and a fourth side wall 114. The plurality of openings 130 is formed in two side walls that are parallel to each other. FIG. 1 shows that the plurality of openings 130 is formed in the first side wall 111 and the third side wall 113.

The battery module may receive pouch-shaped battery cells, and in the battery pack 100 shown in FIG. 1, the cup portion of the pouch-shaped battery cells may be disposed so as to face the first side wall 111 and the third side wall 113 when considering the shape of the receiving portion 115. During charging and discharging of the battery pack, the battery module including the pouch-shaped battery cells swells in a direction toward the first side wall 111 and the third side wall 113. Consequently, the plurality of openings 130 is formed in the first side wall 111 and the third side wall 113.

Any one of a cover 210 and a venting valve 220 is selectively coupled to an outer surface of each of the plurality of openings 130.

The amount of gas that is generated may vary depending on the capacity of the plurality of battery modules received in the battery pack housing 110 and the composition of the battery cells. Therefore, when the amount of gas is large, the number of covers 210 may be decreased and the number of venting valves 220 may be increased. When the amount of gas is small, the number of covers 210 may be increased, and the number of venting valves 220 may be decreased.

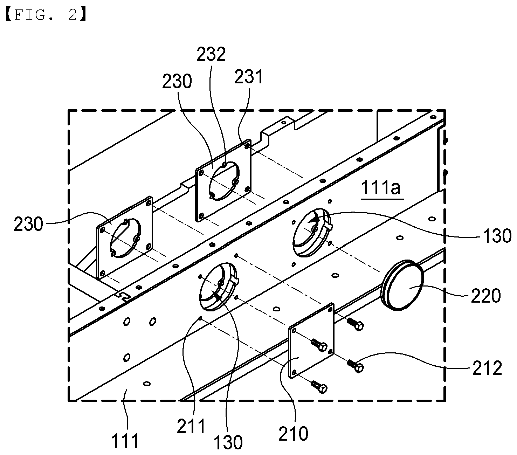

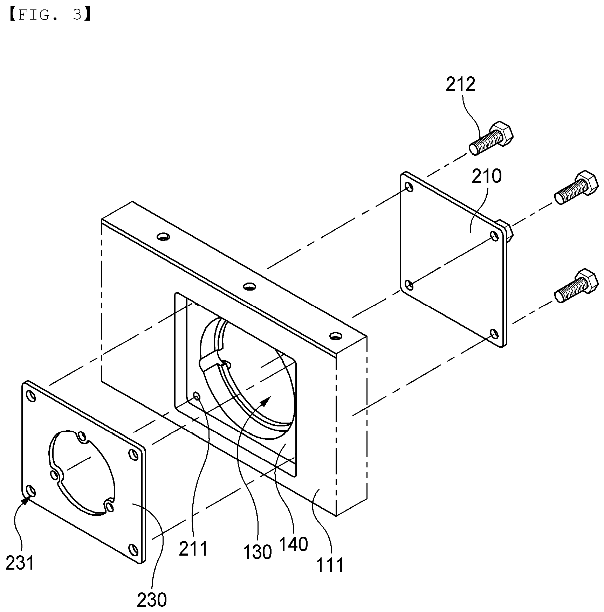

FIG. 2 is a partial enlarged view of FIG. 1, and FIG. 3 is an exploded perspective view of a part where the cover is attached to the opening.

Referring to FIGs. 2 and 3, wherein FIG. 3 shows the state when viewed from the inside of the battery pack housing, each of the plurality of openings 130 formed in the side walls is configured such that a circular through-hole is formed through the center of a quadrangular recess portion 140 formed in an inner surface of the first side wall 111.

The recess portion 140 is provided with a first fastening recess 211 formed through the first side wall 111, a fixing member 230 is located inside the first side wall 111, and the cover 210 or the venting valve 220 is disposed at an outer surface 111a of the first side wall.

A bolt 212 is inserted through a coupling recess of the cover 210 or a coupling recess of the venting valve 220, the first fastening recess 211, and the fixing member 230, whereby the cover 210 or the venting valve 220 may be fixed to the fixing member 230.

The fixing member 230 is mounted in the recess portion 140, and the fixing member 230 is provided with a second fastening recess 231 for coupling with the first side wall 111 and the cover 210 and a third fastening recess 232 for coupling with the venting valve 220.

The second fastening recess 231 is formed at a position corresponding to the first fastening recess 211 formed in the recess portion 140.

When the cover 210 is coupled to at least one of the plurality of openings 130, the cover 210 is coupled to the first side wall 111 and the fixing member 230 via a bolt 212 inserted through the first fastening recess 211 and the second fastening recess 231.

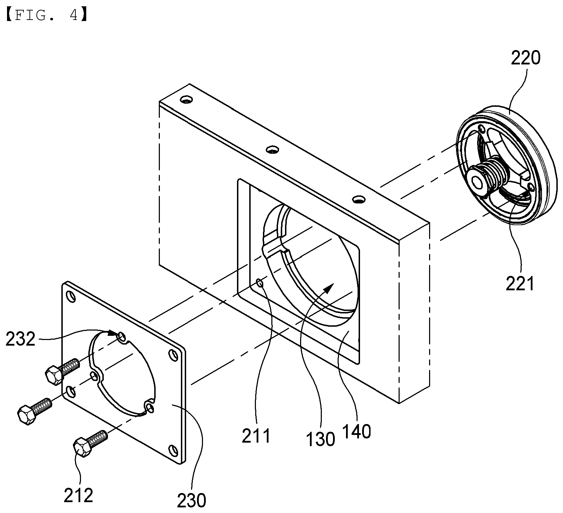

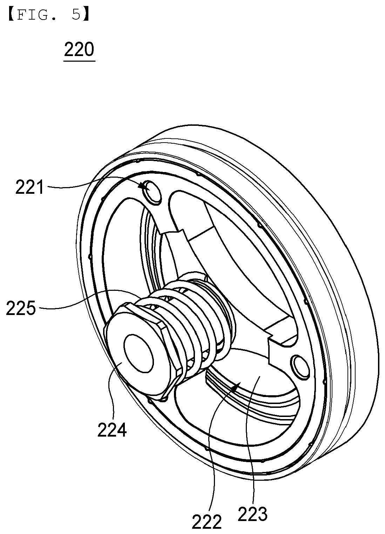

FIG. 4 is an exploded perspective view of a part where the venting valve is added to the opening, and FIG. 5 is a perspective view of the venting valve.

When the venting valve 220 is coupled to at least one of the plurality of openings 130, the venting valve 220 is inserted into the opening 130 and disposed therein.

The venting valve 220 is provided with a fourth fastening recess 221, and is coupled to the fixing member 230 via a bolt inserted through the fourth fastening recess 221 and the third fastening recess 232 of the fixing member 230.

The venting valve 220 may be configured to maintain a sealed state when the internal pressure of the battery pack is normal and to rupture and open when gas discharge is required due to an increase in the internal pressure of the battery pack.

Referring to FIG. 5, the venting valve 220 includes a plurality of passages 222 for gas discharge, a rupture portion 223 configured to rupture when the internal pressure of the battery pack increases, and a pressing portion 224 configured to press the rupture portion 223.

The rupture portion 223 may be provided with a notch or may have a small thickness so as to easily rupture when internal pressure increases.

The rupture portion 223 may rupture when pressed by the pressing portion 224. The pressing portion 224 may be pushed by the swelling of the battery module case and moved in a direction toward the rupture portion 223, and therefore the rupture portion 223 may rupture due to the force of the pressing portion 224 pushing the rupture portion 223. Alternatively, increased pressure in the battery pack may cause the pressing portion 224 to be pushed in the direction toward the rupture portion 223, whereby the rupture portion 223 may rupture.

If the rupture portion 223 ruptures too easily, unnecessary replacement of the battery pack housing may be required. Therefore, it is necessary for the rupture portion 223 to rupture only when the force of the pressing portion 224 pushing the rupture portion 223 exceeds a certain level. Accordingly, the pressing portion 223 may include a spring 225 for pressure adjustment.

In the present invention, as described above, any one of the cover and the venting valve may be selectively applied to each of the plurality of openings formed in the battery pack housing. Even when applying a single form of the battery pack according to the present invention to various electric vehicle models, therefore, it is possible to set the number of venting valves according to the capacity of the battery modules constituting the battery pack.

Those skilled in the art to which the present invention pertains will appreciate that various applications and modifications are possible within the scope of the present invention based on the above description.

### (Description of Reference Numerals)

100: Battery pack
110: Battery pack housing
111: First side wall 111a: Outer surface of first side wall
112: Second side wall
113: Third side wall
114: Fourth side wall
115: Receiving portion
120: Cover plate
130: Opening
140: Recess portion
210: Cover
211: First fastening recess 212: Bolt
220: Venting valve
221: Fourth fastening recess
222: Passage
223: Rupture portion 224: Pressing portion
225: Spring
230: Fixing member
231: Second fastening recess 232: Third fastening recess

## Claims

1. A battery pack comprising:
a battery pack housing having a receiving portion configured to receive a plurality of battery modules; and
a cover plate coupled to an open upper surface of the battery pack housing, wherein
the battery pack housing comprises side walls formed in a quadrangular frame shape,
a plurality of openings is formed in the side walls, and
any one of a cover and a venting valve is selectively coupled to an outer surface of each of the plurality of openings.

2. The battery pack according to claim 1, wherein the plurality of openings is formed in two of the side walls that are parallel to each other.

3. The battery pack according to claim 1, wherein each of the plurality of openings is configured such that a circular through-hole is formed through a center of a quadrangular recess portion formed in an inner surface of the side wall.

4. The battery pack according to claim 3, wherein
the recess portion is provided with a first fastening recess formed through the side wall, and
a bolt is inserted through first fastening recess to fix a fastening member coupled to the cover or the venting valve.

5. The battery pack according to claim 3, wherein
a fixing member is mounted in the recess portion, and
the fixing member is provided with a second fastening recess for coupling with the side wall and the cover and a third fastening recess for coupling with the venting valve.

6. The battery pack according to claim 5, wherein the second fastening recess is formed at a position corresponding to a first fastening recess formed in the recess portion.

7. The battery pack according to claim 5, wherein, when the cover is coupled to at least one of the plurality of openings, the cover is coupled to the side wall and the fixing member via a bolt inserted through the first fastening recess and the second fastening recess.

8. The battery pack according to claim 5, wherein, when the venting valve is coupled to at least one of the plurality of openings, the venting valve is disposed in the opening.

9. The battery pack according to claim 8, wherein the venting valve is provided with a fourth fastening recess, and is coupled to the fixing member via a bolt inserted through the fourth fastening recess and the third fastening recess.

10. The battery pack according to claim 1, wherein the venting valve comprises:
a plurality of passages for gas discharge;
a rupture portion configured to rupture when an internal pressure of the battery pack increases; and
a pressing portion configured to press the rupture portion.

11. The battery pack according to claim 1, wherein the plurality of openings is formed in a side surface facing swelling outer surfaces of the battery modules.
